# EUROPÄISCHE PATENTANMELDUNG

(11) **EP 2 621 042 A1**
(43) Veröffentlichungstag der Anmeldung: **31.07.2013**
(21) Anmeldenummer: 12153011.7
(22) Anmeldetag: 30.01.2012
(51) Int. Cl.: H02G 1/12

(54) **Abmantelungswerkzeug mit doppeltem Längsschnitt**

(71) Anmelder: KRAMPE Immobilien GmbH & Co. KG, 59387 Ascheberg (DE)
(72) Erfinder: Grosserichter, Heinrich, 59387 Ascheberg (DE)
(74) Vertreter: Reimann, Silke

(57) **Zusammenfassung**

Die Erfindung bezieht sich auf ein Abmantelungswerkzeug zur Entfernung des Außenmantels (20) ein- oder mehradriger Kabel (16) durch zwei Backen (1, 2), die über gemeinsame Gelenkachsen (3, 4) zu einem für die Aufnahme des zu entmantelnden Kabels aufklappbaren Hohlkörper miteinander verbunden sind und nahe an ihrem einem Ende mit Schneiden versehen sind, wobei die Schneiden an den Enden der Backen (1, 2) als ein Längsschnitt ausführendes Schlitzmesser (14, 15) ausgeführt sind, so dass bei geschlossenem Werkzeug das Kabel (16) derart durch den Hohlkörper geführt ist, dass der Außenmantel (20) des Kabels fehlerfrei mit zwei Längsschnitten aufgeschlitzt wird.

## Beschreibung

Die Erfindung betrifft ein Abmantelungswerkzeug zur Entfernung des Außenmantels ein- oder mehradriger Kabel durch zwei Backen, die über gemeinsame Gelenkachsen zu einem für die Aufnahme des zu entmantelnden Kabels aufklappbaren Hohlkörper miteinander verbunden sind und nahe an ihrem einem Ende mit Schneiden für den Längsschnitt versehen sind.

Zur Entfernung des Außenmantels von Rundkabeln ist aus der Patentschrift DE 10 2009 025 908 B3 ein Abmantelungswerkzeug bekannt, bei dem die Führung des Kabels, das mit einem Längsschnitt versehen werden soll, durch eine Führungsmulde in dem durch zwei Backen gebildeten Hohlkörper und durch Ausnehmungen in den Längsseiten der Backen des Abmantelungswerkzeugs erfolgt. Das Kabel wird in etwa 45° schräg durch das geschlossene Werkzeug gezogen und dabei an einem Messer für den Längsschnitt entlang geführt.

Im Gebrauch hat sich gezeigt, dass das Werkzeug für Breitband Distributionskabel, wie z.B. I-VHH aus der Serie der Lichtwellenleiter-Kabel, mit einer schwierigen Außenummantelung nicht so praktisch zu handhaben ist. Das längsseitige aufschlitzen eines derartigen Kabels mittels eines einzigen Schnittes durch ein einzelnes Messer, das an einem Ende innen im Hohlkörper angeordnet ist, bereitet Probleme, da die inneren Adern mit dem Außenmantel miteinander verbacken sind. Durch den einzelnen Längsschnitt am Außenmantel des Kabels werden die Adern und das Kabelinnere nicht vollständig freigelegt. Aus diesem Grund ist es notwendig, dass die Adern und das Stützelement des Kabels von dem Außenmantel mit den Fingern einzeln herausgetrennt werden.

In dem Werkzeug gemäß der Patentanmeldung DE 38 08 950 A1 aus einem Hohlkörper mit zwei Backen ist im Inneren des Hohlkörpers ein Schlitzmesser vorgesehen, das einen Längsschnitt des Kabelmantels erlaubt. Das Schlitzmesser ist nahe an einem Ende des Hohlkörpers angeordnet. Beim Ausführen des Längsschnitts wird das Kabel nach Öffnen der Backen hereingelegt. Unter Zusammendrücken der beiden Backen dringt das Schlitzmesser in den Außenmantel des Kabels ein und mit dem Herausziehen des Kabels vollzieht das Schlitzmesser dann den Längsschnitt. An dem gegenüberliegenden Ende des Hohlkörpers sind unmittelbar an der Stirnseite in den beiden Backen Schneiden angeordnet, um einen Rundschnitt im Außenmantel des Kabels beim Drehen des Abmantelungswerkzeugs durchzuführen. Durch die dem Schlitzmesser für den Längsschnitt gegenüberliegende Anordnung der Schneiden für den Rundschnitt ist die Länge des aufschlitzbaren Außenmantelstücks eng begrenzt und genau einzuhalten.

Die Erfindung hat sich die Aufgabe gestellt, die geschilderten Nachteile bei einem Abmantelungswerkzeug gemäß dem Stand der Technik durch eine andere Ausführung und Anordnung der Schneide für den Längsschnitt zu beseitigen.

Diese Aufgabe wird durch die im kennzeichnenden Teil des Anspruchs 1 wiedergegebene Maßnahmen gelöst. Ausführungsformen der Erfindung sind in den Unteransprüchen beschrieben.

Die Erfindung sieht vor, dass in dem Abmantelungswerkzeug zwei Klingen an einem Ende der beiden Backen gegenüberliegend eingebaut sind, um den Außenmantel des Kabels mit einem doppelten Längsschnitt aufzuschlitzen. Mit dem Abmantelungswerkzeug können alle gängigen Rundkabel, insbesondere Breitband Distributionskabel wie z.B. I-VHH aus der Serie der Lichtwellenleiter-Kabel, mit einem Außendurchmesser ab 8,2 mm schnell und präzise entmantelt werden.

Beim Ausführen des doppelten Längsschnitts wird das Kabel nach Öffnen der Backen hereingelegt. Unter Zusammendrücken der beiden Backen dringen die beiden inneren Klingen jeweils etwa 1 mm an zwei gegenüberliegenden Stellen des Außenmantels ein. Mit dem Wegziehen des geschlossenen Werkzeugs bzw. Durchziehen des Kabels durch das geschlossene Werkzeug wird das Kabel durch den von den beiden Backen gebildeten Hohlkörper geführt und fehlerfrei an den beiden Klingen vorbeigeführt, wodurch der doppelte Längsschnitt im Außenmantel des Kabels vollzogen wird. Der Längsschnitt erfolgt gerade und in gleichmäßiger Tiefe, ohne dass es einer weiteren Führung des Kabels durch die Finger bedarf.

Vorteilhaft ist die Führung des Kabels in dem erfindungsgemäßen Abmantelungswerkzeug nicht begrenzt, so dass auch lange Kabelstrecken längsseitig aufgeschlitzt und damit das Kabelinnere freigelegt werden. Durch den doppelten Längschnitt können auch Kabel mit schwieriger Außenummantelung, bei denen z.B. die inneren Adern mit dem Außenmantel verbacken sind, einfach bearbeitet werden und die einzelnen Adern zur Verlegung in üblichen Verkabelungsstrukturen bzw. Netztopologien freigelegt werden.

Eine Einstellung der Schnitttiefe auf den jeweiligen Außendurchmesser des Kabels ist nicht notwendig, da das erfindungsgemäß geformte Abmantelungswerkzeug sich auf das jeweilige Rundkabel automatisch einstellt. Dabei ist es hervorragend für Arbeiten in Abzweigdosen und Verteilerdosen geeignet.

Die Erfindung ist nachfolgend anhand eines Ausführungsbeispiels und der beiliegenden, sich auf dieses Ausführungsbeispiel beziehenden Zeichnungen näher erläutert. Es zeigen:
Fig. 1 eine Ansicht auf das Abmantelungswerkzeug im aufgeklappten Zustand.
Fig. 2 eine Vorderansicht im aufgeklappten Zustand.
Fig. 3 einen Längsschnitt durch das Abmantelungswerkzeug mit eingelegtem Kabel.
Fig. 4 eine Teilansicht auf das Profilmesser des Abmantelungswerkzeugs
Fig. 5 einen Querschnitt durch ein mehradriges Kabel.

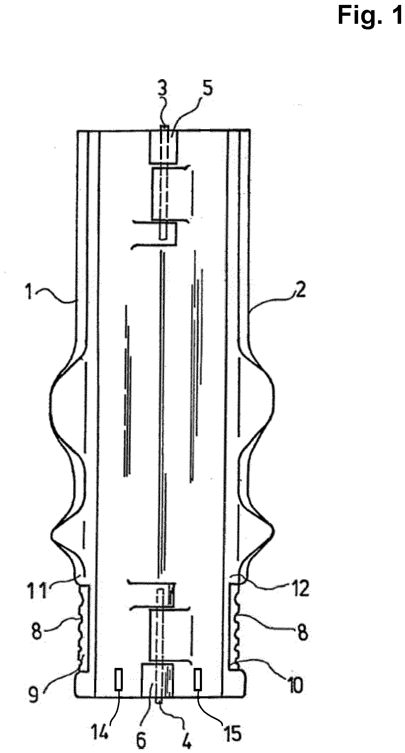

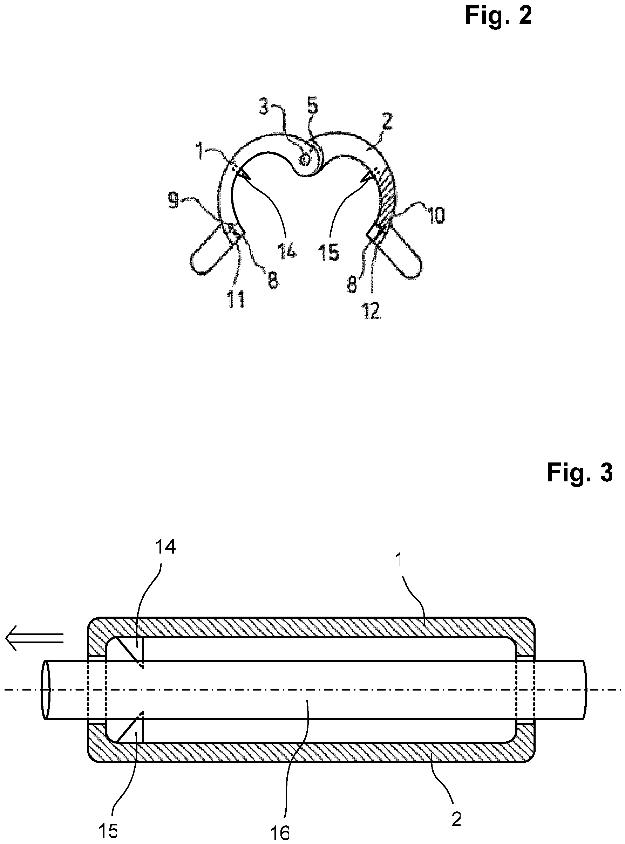

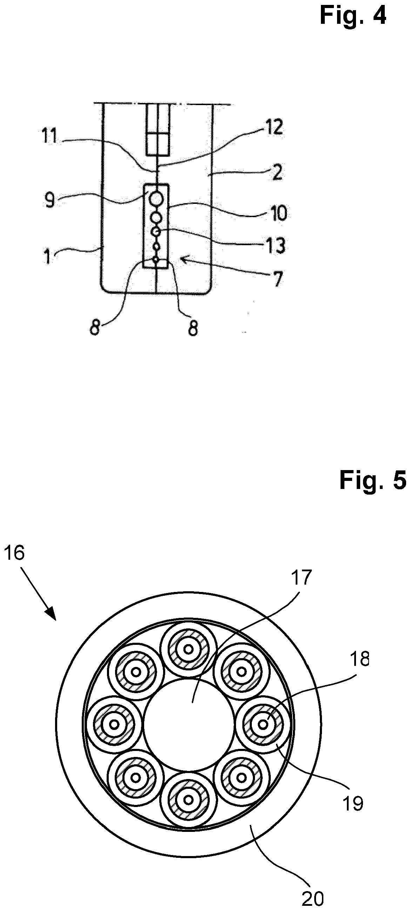

In den Fig. 1, Fig. 2, Fig. 3 und Fig. 4 ist das Abmantelungswerkzeug in bekannter Grundform dargestellt. Die Backen 1, 2 besitzen im Querschnitt eine teilzylindrische Form und an benachbarten Längsseiten verbinden sie Gelenkachsen 3, 4 in der Ausführung von Scharnieren 5, 6. Durch die Gelenkachsen 3, 4 sind die beiden Backen 1, 2 zu einem Hohlkörper zusammenklappbar. An Längskanten 11, 12 der Backen 1, 2 ist ein Profilmesser 7 mit Ausnehmungen 8 vorgesehen, das aus zwei gegengleichen Hälften 9, 10 besteht, die an den den Hohlkörper schließenden Längskanten 11, 12 genau gegenüberliegend angebracht sind, und zwar in paralleler Erstreckung zu den Gelenkachsen 3, 4. In paralleler Anordnung sind auch die Ausnehmungen 8 vorgesehen, die im geschlossen Zustand der Backen 1, 2 kreisförmige Öffnungen 13 unterschiedlicher Größe bilden. In diese Öffnungen 13 werden adäquat zum jeweiligen Durchmesser die Kabeladern 18 quer zum Hohlkörper eingeführt und durch Zusammenklappen der Backen 1,2 wird der Einzelmantel 19 der Kabelader 18 abgeschnitten, vergl. Fig. 5. Beim Herausziehen der Kabelader 18 wird gleichzeitig der Abschnitt des Einzelmantels 19 von der Kabelader 18 abgestreift.

Zur Freilegung der Kabeladern 18 ist es erforderlich, den Außenmantel 20 des Kabels 16 zu entfernen. Das erfindungsgemäße Abmantelungswerkzeug ist dazu unmittelbar an der Stirnseite in den Backen 1, 2 mit zwei Schlitzmessern 14,15 ausgestattet. Jeweils ein Schlitzmesser 14, 15 befindet sich in einer Backe 1, 2 neben dem Scharnier 6. Im zusammengeklappten Zustand des Werkzeugs sind die beiden Schlitzmesser 14, 15 gegenüberliegend angeordnet. Wobei ihre Schneidkanten in senkrechter Stellung zur Längsachse des Hohlkörpers in diesen frei hineinragen.

Bei Ausführung des Längsschnitts wird das Kabel 16 nach Öffnen der Backen 1, 2 in das Abmantelungswerkzeug eingelegt. Durch Zusammendrücken der beiden Backen 1,2 dringen die beiden Schlitzmesser 14, 15 in den Außenmantel 20 des Kabels 16 ein und beim Wegziehen des geschlossenen Werkzeugs bzw. Durchziehen des Kabels durch das geschlossene Werkzeug vollziehen die beiden Schlitzmesser 14, 15 dann den doppelten Längsschnitt. Eine Länge des abzutrennenden Außenmantels 20 ist nicht einzuhalten, da diese beliebig lang sein kann.

Durch die Anordnung der beiden Schlitzmesser 14, 15 gegenüberliegend in den Backen 1, 2 ist gewährleistet, dass der Schnittverlauf des doppelten Längsschnitts im Außenmantel 20 praktisch parallel zu den Kabeladern 18 bzw. in der Werkzeugachse verlaufend sauber ausgeführt werden kann bei geringstem Kraftaufwand.

Fig. 5 zeigt einen Querschnitt durch ein Rundkabel 16, insbesondere I-VHH aus der Serie der Lichtwellenleiter-Kabel. In diesem Kabel 16 sind acht einzelne Adern 18 ringförmig um ein Stützelement 17 angeordnet und in einem gemeinsamen Außenmantel 20 gebündelt. Zwischen den einzelnen Kabeladern 18 und dem Außenmantel 20 kann ein Gewirk aus Kunststoffgarn zur Zugentlastung angeordnet sein. Jede der Kabeladern 18 ist durch einen Einzelmantel 19 abgeschirmt, was ein Absetzen und Montage der einzelnen Kabeladern 18 ermöglicht. Derartige Kabel 16 sind für direkte Steckermontage oder Spleißen geeignet. Lichtwellenleiter mit mehreren Adern 18 sind verfügbar mit allen üblichen Multimode oder Monomode Fasern.

In der beschriebenen Ausführung ist das Abmantelungswerkzeug ein problemloses Mehrfachwerkzeug, indem es nacheinander den Außenmantel 20 des Kabels 16 aufzutrennen und den Einzelmantel der einzelnen Kabeladern 18 abzutrennen vermag, ohne dass eine besondere Führung mit den Fingern erforderlich ist.

### Bezugszeichen

- 1, 2: Backe
- 3, 4: Gelenkachse
- 5, 6: Scharnier
- 7: Profilmesser
- 8: Ausnehmung
- 9, 10: Messerhälfte
- 11, 12: Längskante
- 13: Öffnung
- 14, 15: Schlitzmesser
- 16: Kabel
- 17: Stützelement
- 18: Ader
- 19: Einzelmantel
- 20: Außenmantel

## Patentansprüche

1. Abmantelungswerkzeug zur Entfernung des Außenmantels (20) ein- oder mehradriger Kabel (16) durch zwei Backen (1, 2), die über gemeinsame Gelenkachsen (3, 4) zu einem für die Aufnahme des zu entmantelnden Kabels aufklappbaren Hohlkörper miteinander verbunden sind und nahe an ihrem einem Ende mit Schneiden versehen sind,
**dadurch gekennzeichnet,**
**dass** die Schneiden an den Enden der Backen (1, 2) als ein Längsschnitt ausführendes Schlitzmesser (14, 15) ausgeführt sind, so dass bei geschlossenem Werkzeug das Kabel (16) derart durch den Hohlkörper geführt ist, dass der Außenmantel (20) des Kabels fehlerfrei mit zwei Längsschnitten aufgeschlitzt wird.

2. Abmantelungswerkzeug nach Anspruch 1, **dadurch gekennzeichnet,**
**dass** die beiden Schlitzmesser (14, 15) gegenüberliegend in den Backen angeordnet sind.

3. Abmantelungswerkzeug nach Anspruch 1, **dadurch gekennzeichnet,**
**dass** die beiden Schlitzmesser (14, 15) jeweils etwa 1 mm in den Außenmantel (20) eines Kabels (16) eindringen.

4. Abmantelungswerkzeug nach Anspruch 1, **dadurch gekennzeichnet,**
**dass** es zur Entfernung des Außenmantels (20) von Kabeln (16) ab einem Außendurchmesser von 8,2 mm geeignet ist.

5. Abmantelungswerkzeug nach Anspruch 1, **dadurch gekennzeichnet,**
**dass** an den Längskanten (11, 12) der Backen (1, 2) ein Profilmesser (7) aus zwei gegengleichen Messerhälften (9, 10) mit unterschiedlich großen Öffnungen (13) für die Abisolierung der einzelnen Adern (18) des Kabels (16) angebracht ist.
